# EUROPEAN PATENT SPECIFICATION

(11) **EP 2 717 192 B1**
(45) Date of publication and mention of the grant of the patent: **25.10.2023**
(21) Application number: 13186751.7
(22) Date of filing: 30.09.2013
(51) Int. Cl.: G06F 21/79

(54) **TOKEN ELECTRONIC DEVICE WITH IMPROVED INTERFACE FOR AUTHENTICATION PROCESSES AND SIGNATURES**
TOKEN ELEKTRONISCHE VORRICHTUNG MIT VERBESSERTE SCHNITTSTELLE UM AUTHENTISIERUNGSPROZESSE UND SIGNATUREN DURCHZUFÜHREN
DISPOSITIF ÉLECTRONIQUE DE JETON AVEC INTERFACE AMÉLIORÉE POUR EFFECTUER DES PROCESSUS D'AUTHENTIFICATION ET DES SIGNATURES

(30) Priority: 02.10.2012 IT MI20121642
(43) Date of publication of application: 09.04.2014
(73) Proprietor: BIT4ID S.r.l., 80125 Napoli (IT)
(72) Inventor: Palazzo, Vincenzo, I-80055 Portici (Napoli) (IT)
(74) Representative: Botti & Ferrari S.p.A.

(56) References cited:
- WO-A1-2008/068514
- US-A1- 2006 069 814
- US-A1- 2006 184 806
- US-A1- 2007 118 891
- ISO/IEC FCD 14443-3: "ISO/IEC 14443-3 Identification cards - Contactless integrated circuit(s) cards - Proximity cards - Part 3: Initialization and anticollision", ISO/IEC JTC1/SC17 N1531, XX, XX, 11 June 1999 (1999-06-11), page complete, XP002347584,

## Description

The present invention refers to a token electronic device with improved interface for authentication processes and signatures.

More in particular, but non exclusively, the invention relates to a token device operating as a peripheral device, which may be removably coupled to an electronic host device to exchange data with it and which is also suitable for "hot" removal or disconnection from said electronic device, i.e. in a "hot swap" mode of operation, without the electronic device needing a restart.

The following description is specifically related to this exemplary embodiment, solely for simplification purposes.

### Known art

As is known in the particular technical field of the present invention, the so called "token", which can be defined as peripheral and security electronic devices for authentication processes and digital signatures, which may be used for authentication and electronic signature applications, are gaining widespread acceptance.

In some cases, the token devices may be provided with a fast insertion connection lead and may be removably coupled to an electronic device or personal computer by means of an USB access port, to facilitate data exchange.

However there are also different types of "token", such as smart card readers or generic IC card readers, which are in turn provided with a fast connection to an USB port of the electronic device, to which they have to be coupled.

The coupling through a USB input port allows the use of a standard connection. In fact, it is known that USB ports (Universal Serial Bus) operate according to a serial communication standard allowing the connection of various peripherals to the same type of computer. The USB standard has in fact been developed in order to allow the connection of various peripherals using only one standardized interface and only one type of connector, and in order to improve the plug-and-play functionality by "hot" (hot swap) connecting or disconnecting the removable devices, without the need for rebooting of the computer or electronic host device.

However, all these "token" devices, although being convenient from several points of view and gaining widespread diffusion, have a common drawback, in that it is required to preemptively install a so called driver in the host device, in order to allow the device to interact and exchange data with the electronic device or host computer.

Such a driver may be extremely simple or even already present in the host computer or in the token device, but nevertheless it has to be previously installed before the communication between the token and the electronic device to be coupled to may be established.

WO 2008-068514 discloses a portable apparatus including a USB-compatible component, adapted to be connected to a PC 103, and a wireless component, adapted to communicate with an external device. When the apparatus is physically connected to the PC, it is recognized by the Operative System of the PC and communicates with the wireless device.

The problem to be solved by the present invention is to envisage an electronic device of the "token" type for authentication processes and digital signature applications having structural and functional characteristics such as to allow an improvement of the communication interface with the electronic device to which the token has to be coupled.

Another object of the present invention is that of simplifying the above coupling for the user, and more particularly for not expert users.

A further object of the present invention is to provide a token device of above said kind which avoids the necessity to previously install the communication driver for coupling the token to the electronic device.

### Summary of the invention

The idea for achieving the objects of the present invention is to provide the token device for authentication processes and digital signature applications with a bidirectional reader operating at radiofrequency, i.e. an NFC reader (Near Field Communication), capable of operating in a HID mode (Human Interface Device). The token device according to the invention is set out in claim 1, and a use of the token device is set out in claim 9. Further embodiments are provided in the dependent claims.

The term "token" refers to a physical device required for performing authentication and digital signatures, for example a double factor authentication, which foresees the use of a small, essentially pocket sized portable electronic device, which represents a supplemental authentication factor.

The token according to the invention is for instance a USB key, a smart card, an IC Card or another device, including an internal memory and able to be connected to another electronic device or host device, i.e. a smart card reader, for communicating and authenticating or digital signing.

In particular, the token is such as to wirelessly communicate with the electronic host device, i.e. in a wireless mode, through the NFC interface, being also provided with a HID interface and a respective control firmware or proprietary protocol, which allow an automatic acknowledgement and connection with the host device, i.e. without the need of installing a driver in the device. In particular, the firmware of the HID interface is capable of controlling the host device for authentication or digital signature in wireless mode.

According to an embodiment of the invention, the token is a smart card provided with a HID interface and a control firmware for the HID interface suitable for automatically recognizing and controlling the smart card reader. The smart card reader acts as a host device or is in turn connected to an electronic data acquisition device.

Advantageously, the execution of an electronic signature or authentication with the token according to the present invention is easy since there is no need for a previous installation of driver in the host device or since there is no physical contact between the token and the host device.

In other words, the idea on which the present invention is based is to provide a token electronic device for authentication processes and digital signature application with an improved communication interface and operating as a peripheral device which may be removably coupled to an electronic host device in order to exchange data with the same, characterized in that it comprises a bidirectional radiofrequency reader and that it incorporates a firmware with HID protocol (Human Interface Device).

More in particular, said bidirectional reader of the token device is of the NFC type (Near Field Communication), a technology which offers a bidirectional wireless (RF) short range connectivity.

The token is pocket-sized and allows the authentication or digital signature, for example by means of a code or a cryptographic key stored in the same. The token comprises the improved communication interface, the NFC component and a firmware with HID protocol (Human Interface Device), for transferring the code and for signature authentication, through the NFC interface.

The token contains an application such as to interpret the HID communication protocol and execute and/or translate command signals transmitted or received by the host device according to the specified protocol.

Advantageously, the firmware with the HID protocol (Human Device Interface) resides in the token.

Moreover, the token incorporates a radiofrequency receiving and transmitting antenna.

Optionally, a memory portion is provided for storing the software required for using the communication device.

This memory portion is of the non volatile type.

Preferably, the token device according to the invention may be externally configured or formed like a USB key.

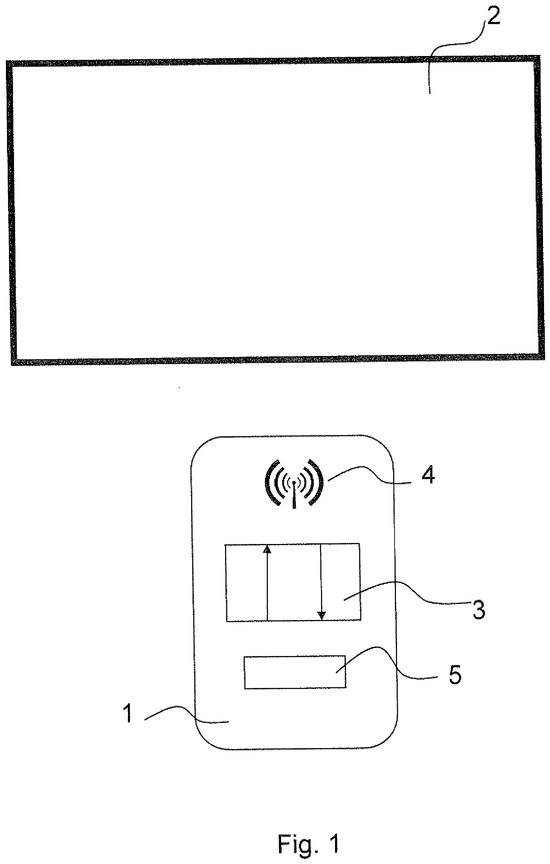

The characteristics and advantages of the token device according to the present invention will be apparent from the following description, of one illustrative and non limiting embodiment, with reference to the figure in the attached drawing.

The figure shows a schematic block diagram of a token electronic device according to the present invention.

### Detailed description

With reference to said figure, 1 generally and schematically indicates an electronic "token" device for authentication processes and digital signature according to the present invention.

The token device 1 is a portable small, essentially pocket sized device, which may be removably coupled to an electronic host device, schematically represented by reference numeral 2. Evidently, the token device 1 is housed within a conventional housing, which is not shown in the drawing.

The electronic host device 2 may be a personal computer or any other electronic instrument provided with a data processing unit, such as a CPU.

The device 2 may also be a portable device, such as a notebook, a handheld device, a mobile phone or a tablet.

However, the electronic device 2 may also be a fixed computer such as a desktop computer.

The token electronic device 1 according to the present invention is such as to exchange data with the electronic device 2 according to a coupling and data exchange mode, which is also part of the present invention. The host device/token coupling is contactless and the acknowledging of the host device is immediate and does not require any specific driver in the host device. For example, the token is a smart card and the electronic host device is a smart card reader; the firmware or proprietary protocol of the HID interface in the smart card can automatically recognize the smart card reader and execute the authentication or signature through wireless communication with the reader. The reader is connected for example to a personal computer or electronic device which is connected through the internet to a server which requests the authentication or signature.

Moreover, the token device 1 is such as to allow a "hot" removal or disconnection from said electronic device 2, according to the "hot swap" mode, i.e. without the need to reboot the electronic device 2.

Advantageously, to this end, the token device 1 is provided with a radiofrequency communication component, or transmitter/receiver 3, and a HID interface.

Data received through the communication component 3 may be written in the token's memory. The communication component obviously also comprises an antenna 4 for radiofrequency receiving/ transmitting.

The bidirectional reader 3 functions according to a wireless communication technology, for identification and storing of data, for example of the RFID type (Radio Frequency Identification).

The bidirectional reader 3 is a NFC reader (Near Field Communication).

The NFC standard is a technology which has evolved from a combination of contactless identification systems or RFID and other connectivity systems. Contrary to simpler RFID devices, the NFC standard allows for a bidirectional communication and when two NFC devices (initiator and target) are put close to each other, approximately within a 4 cm distance range, a peer-to-peer network between the two components is established, and both can send and receive information.

The NFC technology operates at a frequency of 13,56 MHz and may achieve a maximum data rate of 424 kbit/s.

Therefore, the bidirectional reader 3 incorporated within the token device 1 according to the present invention provides bidirectional wireless (RF) short range connectivity (up to a maximum distance of 10 cm).

A bidirectional NFC reader 3 may include a suitable integrated chip.

Even more advantageously, the bidirectional reader 3 is also capable of operating in HID mode (Human Device Interface).

A HID device is an electronic device suitable for direct interaction with a human being, by directly receiving control input from a human being, and by outputting signals, which may be perceived or recognized by a human being.

Typical common examples of HID devices are: a computer keyboard, a mouse, a joystick, a webcam, a headset/microphone or a fingerprint scanner.

All these devices are already standardized and there are bidirectional communication protocols which allow their "plug and play" use on any electronic device or computer. This is due to the availability of universal drivers, which already comprise all possible alternative HID devices and which are incorporated in a firmware which resides in the electronic devices or computer allowing a dynamic association between the input/output data and the device's functionalities.

The HID protocol allows a particularly simple coupling between the token device 1 and the electronic device 2, since the driver installation for communicating with the peripheral device is not required.

In order to provide the device of the invention with a HID protocol, it is necessary to develop a firmware component which implements its own interface according to the Firmware Specification provided for the same protocol at international level.

The token device 1 stores the "HID" protocol implementation in the firmware.

The electronic device 1 may include further communication interfaces and foresees a physical fast insertion connection for a USB port. The token device 1 may therefore be structured like a USB key which implements the described HID interface and above said components.

The structure and the firmware of the token device 1 according to the invention provide a multifunctional token which may internally house a memory for storing applications.

Advantageously, the communication component operating according to the NFC standard and the firmware for implementing the HID interface render the token device 1 capable of readily operating without requiring the installation of a specific driver.

The HID peripherals in fact use a single integrated driver already provided by the operating system, without the need for other particular drivers.

The token is also provided with means for executing a digital signature or authentication.

Expressed in very short terms, the device 1 is a NFC token with HID interface.

A generic user who wants to actually interact with a NFC peripheral needs the following components:
- a driver for the NFC device with which she wants to communicate,
- a user application using the device according to the NFC standard, wherein this application has to be stored on a separate medium and be installed in the user device,
- administrative rights for the user device in order to install the drivers.

On the other hand, the token device 1 according to the invention has the great advantage of freeing the user, and in particular the inexperienced user, from any complication since the user is not required to provide above said components, to install drivers and to acquire administrative rights.

All user applications may be stored on the memory of the token 1.

The provision of a multifunctional token device with a bidirectional NFC reader 3 and HID interface allows the physical coupling between token and host device 2 to be immediately active.

This reduces the hassles and the time required for this type of peripheral units.

Therefore the invention solves the technical problem and achieves various advantages, which have been already listed above. Moreover, the invention provides a particularly simple and economic token structure, suitable for mass production.

Advantageously, according to the present invention, the proprietary protocol or control firmware of HID interface recognizes the host device, i.e. the token reader, facilitating the immediate communication between the device and the token.

## Claims

1. A pocket-sized token device (1) for authentication or digital signature, the token device being a peripheral unit adapted to be removably coupled to an electronic host device which is a smart card reader, said token device comprising a communication interface, in order to exchange data with the electronic host device and is **characterized by** comprising:
a radiofrequency communication component (3) according to the Near Field Communication, NFC, standard for providing a wireless communication with said electronic host device, wherein said pocket-sized token device (1) and said electronic host device establish a peer-to-peer network according to the NFC standard to provide bi-directional communication, and
a separate Human Interface Device, HID, interface to the electronic host device provided with a control firmware, said firmware being adapted to control the electronic host device for performing said authentication or signature by means of said radiofrequency communication component (3),
wherein said control firmware of said HID interface is adapted to automatically recognize the electronic host device and to perform the authentication or signature through said radiofrequency communication component (3) according to the NFC standard which is configured to transmit a code stored in said pocket-sized token device (1) and realizes a wireless communication with the electronic host device, so that said separate HID interface is able to control said electronic host device to exchange data via said radiofrequency communication component (3) according to the NFC standard.

2. A pocket-sized token device according to claim 1, **characterized in that** said token device is a smart card or an IC card.

3. A pocket-sized token device according to claim 1, **characterized in that** it comprises a memory portion (5) wherein the code for the HID interface implementation is stored.

4. A pocket-sized token device according to claim 3, **characterized in that** said memory portion (5) is of the non-volatile type.

5. A pocket-sized token device according to claim 3, **characterized in that** said memory portion (5) comprises data received through said radiofrequency communication component (3).

6. A pocket-sized token device according to claim 1, **characterized in that** said radiofrequency communication component (3) comprises an antenna (4) for radiofrequency receiving/transmitting.

7. A pocket-sized token device according to claim 1, **characterized in that** it is a USB key and it incorporates an USB connection interface.

8. A pocket-sized token device according to claim 4, **characterized in that** said memory portion (5) of the non-volatile type stores the software needed for the use of the radiofrequency communication component (3) according to the NFC standard.

9. Use of a Human Interface Device, HID, interface in a pocket-sized token device (1) for authentication or digital signature to communicate to an electronic host device, the pocket-sized token device (1) being a peripheral unit adapted to be removably coupled to the electronic host device and comprising:
a radiofrequency communication component (3) according to the Near Field Communication, NFC, standard for providing a wireless communication with said electronic host device, wherein said pocket-sized token device and said electronic host device establish a peer-to-peer network according to the NFC standard to provide bi-directional communication, and
the separate HID interface to the electronic host device provided with a control firmware, said firmware being adapted to control the electronic host device for performing said authentication or signature by means of said radiofrequency communication component (3),
wherein said control firmware of said separate HID interface is adapted to automatically recognize the electronic host device and to perform the authentication or signature through said radiofrequency communication component (3) according to the NFC standard which configured to transmit a code stored in said pocket-sized token device (1) and realizes a wireless communication with the electronic host device, so that said separate HID interface is able to control said electronic host device to exchange data via said radiofrequency communication component (3) according to the NFC standard.

## Patentansprüche

1. Token-Vorrichtung im Taschenformat (1) für eine Authentifizierung oder eine digitale Signatur, wobei die Token-Vorrichtung eine periphere Einheit ist, die ausgelegt ist, abnehmbar an eine elektronische Host-Vorrichtung, die ein Smartcard-Lesegerät ist, gekoppelt zu werden, wobei die Token-Vorrichtung eine Kommunikationsschnittstelle umfasst, um Daten mit der elektronischen Host-Vorrichtung auszutauschen, **gekennzeichnet durch**:
eine Funkfrequenzkommunikationskomponente (3) gemäß dem Nahfeldkommunikationsstandard, NFC-Standard, zum Bereitstellen einer drahtlosen Kommunikation mit der elektronischen Host-Vorrichtung, wobei die Token-Vorrichtung im Taschenformat (1) und die elektronische Host-Vorrichtung ein Peer-to-Peer-Netz gemäß dem NFC-Standard einrichten, um eine bidirektionale Kommunikation bereitzustellen, und
eine getrennte Schnittstelle einer Vorrichtung mit menschlicher Schnittelle, HID-Schnittstelle, zu der elektronischen Host-Vorrichtung, die mit einer Steuer-Firmware ausgestattet ist, wobei die Firmware ausgelegt ist, die elektronische Host-Vorrichtung zum Ausführen der Authentifizierung oder der Signatur mit Hilfe der Funkfrequenzkommunikationskomponente (3) zu steuern,
wobei die Steuer-Firmware der HID-Schnittstelle ausgelegt ist, die elektronische Host-Vorrichtung automatisch zu erkennen und die Authentifizierung oder die Signatur durch die Funkfrequenzkommunikationskomponente (3) gemäß dem NFC-Standard auszuführen, die konfiguriert ist, einen Code zu senden, der in der Token-Vorrichtung (1) im Taschenformat gespeichert ist, und eine drahtlose Kommunikation mit der elektronischen Host-Vorrichtung realisiert, so dass die getrennte HID-Schnittstelle die elektronische Host-Vorrichtung steuern kann, Daten über die Funkfrequenzkommunikationskomponente (3) gemäß dem NFC-Standard auszutauschen.

2. Token-Vorrichtung im Taschenformat nach Anspruch 1, **dadurch gekennzeichnet, dass** die Token-Vorrichtung eine Smartcard oder eine IC-Karte ist.

3. Token-Vorrichtung im Taschenformat nach Anspruch 1, **dadurch gekennzeichnet, dass** sie einen Speicherteil (5) umfasst, in dem der Code für die HID-Schnittstellenimplementierung gespeichert ist.

4. Token-Vorrichtung im Taschenformat nach Anspruch 3, **dadurch gekennzeichnet, dass** der Speicherteil (5) vom nichtflüchtigen Typ ist.

5. Token-Vorrichtung im Taschenformat nach Anspruch 3, **dadurch gekennzeichnet, dass** der Speicherteil (5) Daten umfasst, die durch die Funkfrequenzkommunikationskomponente (3) empfangen werden.

6. Token-Vorrichtung im Taschenformat nach Anspruch 1, **dadurch gekennzeichnet, dass** die Funkfrequenzkommunikationskomponente (3) eine Antenne (4) für ein Funkfrequenzempfangen/- senden umfasst.

7. Token-Vorrichtung im Taschenformat nach Anspruch 1, **dadurch gekennzeichnet, dass** sie ein USB-Stick ist und sie eine USB-Verbindungsschnittstelle enthält.

8. Token-Vorrichtung im Taschenformat nach Anspruch 4, **dadurch gekennzeichnet, dass** der Speicherteil (5) des nichtflüchtigen Typs die Software speichert, die für die Verwendung der Funkfrequenzkommunikationskomponente (3) gemäß dem NFC-Standard benötigt wird.

9. Verwendung einer Schnittstelle einer Vorrichtung mit menschlicher Schnittstelle, HID-Schnittstelle, in einer Token-Vorrichtung im Taschenformat (1) für eine Authentifizierung oder eine digitale Signatur, um mit einer elektronischen Host-Vorrichtung zu kommunizieren, wobei die Token-Vorrichtung im Taschenformat (1) eine periphere Einheit ist, die ausgelegt ist, abnehmbar an die elektronische Host-Vorrichtung gekoppelt zu werden, und umfasst:
eine Funkfrequenzkommunikationskomponente (3) gemäß dem Nahfeldkommunikationsstandard, NFC-Standard, zum Bereitstellen einer drahtlosen Kommunikation mit der elektronischen Host-Vorrichtung, wobei die Token-Vorrichtung im Taschenformat (1) und die elektronische Host-Vorrichtung ein Peer-to-Peer-Netz gemäß dem NFC-Standard einrichten, um eine bidirektionale Kommunikation bereitzustellen, und
die getrennte HID-Schnittstelle zu der elektronischen Host-Vorrichtung, die mit einer Steuer-Firmware ausgestattet ist, wobei die Firmware ausgelegt ist, die elektronische Host-Vorrichtung zum Ausführen der Authentifizierung oder der Signatur mit Hilfe der Funkfrequenzkommunikationskomponente (3) zu steuern,
wobei die Steuer-Firmware der getrennten HID-Schnittstelle ausgelegt ist, die elektronische Host-Vorrichtung automatisch zu erkennen und die Authentifizierung oder die Signatur durch die Funkfrequenzkommunikationskomponente (3) gemäß dem NFC-Standard auszuführen, die konfiguriert ist, einen Code zu senden, der in der Token-Vorrichtung (1) im Taschenformat gespeichert ist, und eine drahtlose Kommunikation mit der elektronischen Host-Vorrichtung realisiert, so dass die getrennte HID-Schnittstelle die elektronische Host-Vorrichtung steuern kann, Daten über die Funkfrequenzkommunikationskomponente (3) gemäß dem NFC-Standard auszutauschen.

## Revendications

1. Un dispositif de jeton de poche (1) pour l'authentification ou la signature numérique, le dispositif de jeton étant une unité périphérique adaptée pour être reliée de manière amovible à un dispositif électronique hôte qui est un lecteur de carte à puce, ledit dispositif de jeton comprenant une interface de communication, afin d'échanger des données avec le dispositif électronique hôte et est **caractérisé par** :
un composant (3) de communication par radiofréquence selon la norme Communication en Champ Proche, NFC, pour fournir une communication sans fil avec ledit dispositif électronique hôte, ledit dispositif de jeton de poche (1) et ledit dispositif électronique hôte établissant un réseau pair-à-pair *("peer-to-peer")* selon la norme NFC afin de fournir une communication bidirectionnelle, et une interface Dispositif d'Interface Humaine ("*Human Interface Device"),* HID, séparée par rapport au dispositif électronique hôte, qui est pourvue d'un micrologiciel de commande, ledit micrologiciel étant adapté pour commander le dispositif électronique hôte afin d'effectuer ladite authentification ou signature au moyen dudit composant (3) de communication par radiofréquence,
ledit micrologiciel de commande de ladite interface HID étant adapté pour reconnaître automatiquement le dispositif électronique hôte et pour effectuer l'authentification ou signature par l'intermédiaire dudit composant (3) de communication par radiofréquence selon la norme NFC qui est configuré pour transmettre un code stocké dans ledit dispositif de jeton de poche (1) et réalise une communication sans fil avec le dispositif électronique hôte, de sorte que ladite interface HID séparée est apte à commander ledit dispositif électronique hôte afin de réaliser un échange de données au moyen dudit composant (3) de communication par radiofréquence selon la norme NFC.

2. Un dispositif de jeton de poche selon la revendication 1, **caractérisé en ce que** ledit dispositif de jeton est une carte à puce ou une carte à CI.

3. Un dispositif de jeton de poche selon la revendication 1, **caractérisé en ce qu'**il comprend une partie de mémoire (5) dans laquelle le code pour la mise en oeuvre de l'interface HID est stocké.

4. Un dispositif de jeton de poche selon la revendication 3, **caractérisé en ce que** ladite partie de mémoire (5) est de type non-volatile.

5. Un dispositif de jeton de poche selon la revendication 3, **caractérisé en ce que** ladite partie de mémoire (5) comprend des données reçues à travers ledit composant (3) de communication par radiofréquence.

6. Un dispositif de jeton de poche selon la revendication 1, **caractérisé en ce que** ledit composant (3) de communication par radiofréquence comprend une antenne (4) de réception/émission radiofréquence.

7. Un dispositif de jeton de poche selon la revendication 1 , **caractérisé en ce qu'**il s'agit d'une clé USB et qu'il intègre une interface de connexion USB.

8. Un dispositif de jeton de poche selon la revendication 4, **caractérisé en ce que** ladite partie de mémoire (5) de type non volatile stocke le logiciel nécessaire à l'utilisation du composant (3) de communication par radiofréquence selon la norme NFC.

9. Utilisation d'une interface Dispositif d'Interface Humaine ("*Human Interface Device"),* HID, dans un dispositif de jeton de poche (1) pour l'authentification ou la signature numérique afin de communiquer avec un dispositif électronique hôte, le dispositif de jeton de poche (1) étant une unité périphérique adaptée pour être reliée de manière amovible au dispositif électronique hôte et comprenant :
un composant (3) de communication par radiofréquence selon la norme Communication en Champ Proche, NFC, pour fournir une communication sans fil avec ledit dispositif électronique hôte, ledit dispositif de jeton de poche et ledit dispositif électronique hôte établissant un réseau pair-à-pair (*"peer-to-peer"*) selon la norme NFC afin de fournir une communication bidirectionnelle, et l'interface HID séparée vers le dispositif électronique hôte étant pourvue d'un micrologiciel de commande, ledit micrologiciel étant adapté pour commander le dispositif électronique hôte afin d'effectuer ladite authentification ou signature au moyen dudit composant (3) de communication par radiofréquence,
ledit micrologiciel de commande de ladite interface HID séparée est adapté pour reconnaître automatiquement le dispositif électronique hôte et effectuer l'authentification ou la signature à travers ledit composant (3) de communication par radiofréquence selon la norme NFC qui est configuré pour transmettre un code stocké dans ledit dispositif de jeton de poche (1) et réalise une communication sans fil avec le dispositif électronique hôte, de sorte que ladite interface HID séparée est apte à commander ledit dispositif électronique hôte pour échanger des données via ledit composant (3) de communication par radiofréquence selon la norme NFC.
